(19) Europäisches Patentamt
European Patent Office
Office européen des brevets

(11) Veröffentlichungsnummer: **0 464 448 B1**

(12) **EUROPÄISCHE PATENTSCHRIFT**

(45) Veröffentlichungstag der Patentschrift: **31.08.94**

(51) Int. Cl.[5]: **C09B 62/09**, D06P 1/382

(21) Anmeldenummer: **91109927.3**

(22) Anmeldetag: **18.06.91**

# (54) Azoreaktivfarbstoffe mit mindestens zwei Halogentriazinankern.

(30) Priorität: **29.06.90 DE 4020769**

(43) Veröffentlichungstag der Anmeldung:
**08.01.92 Patentblatt 92/02**

(45) Bekanntmachung des Hinweises auf die Patenterteilung:
**31.08.94 Patentblatt 94/35**

(84) Benannte Vertragsstaaten:
**CH DE FR GB IT LI**

(56) Entgegenhaltungen:
**EP-A- 0 387 589**
**GB-A- 1 583 387**

**Patent Abstracts of Japan, unexamined applications, C field, Band 9, Nr. 200, 16 August 1985 The Patent Office Japanese Government**

(73) Patentinhaber: **BASF Aktiengesellschaft**
**Carl-Bosch-Strasse 38**
**D-67063 Ludwigshafen (DE)**

(72) Erfinder: **Loeffler, Hermann**
**Haydnstrasse 23**
**W-6720 Speyer (DE)**
Erfinder: **Patsch, Manfred, Dr.**
**Fritz-Wendel-Strasse 4**
**W-6706 Wachenheim (DE)**
Erfinder: **Krallmann, Reinhold**
**Bachweg 2**
**W-6719 Weisenheim (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

**Beschreibung**

Die vorliegende Erfindung betrifft neue Azoreaktivfarbstoffe der Formel I

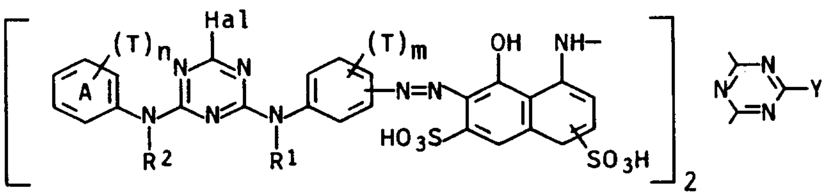

(I),

in der

| | |
|---|---|
| m | 0, 1 oder 2, |
| n | 1 oder 2, |
| $R^1$ und $R^2$ | gleich oder verschieden sind und unabhängig voneinander jeweils Wasserstoff, $C_1$-$C_4$-Alkyl, das gegebenenfalls durch Hydroxy, $C_1$-$C_4$-Alkoxy, Halogen, Cyano, Carboxyl oder Hydroxysulfonyl substituiert ist, |
| T | gleich oder verschieden ist und Carboxyl oder Hydroxysulfonyl, |
| Hal | Fluor oder Chlor und |
| Y | Fluor, Chlor oder den Rest $NR^1R^2$, $OR^1$ oder $SR^1$, wobei $R^1$ und $R^2$ jeweils die obengenannte Bedeutung besitzen, bedeuten und |

der Ring A benzoanelliert und/oder durch $C_1$-$C_4$-Alkyl, $C_1$-$C_4$-Alkoxy oder Halogen substituiert sein kann, mit der Maßgabe, daß

a) die Summe der Hydroxysulfonylreste oder der Hydroxysulfonyl- und Carboxylreste zusammen mindestens 8 beträgt, und daß

b) wenn das Strukturelement der Formel

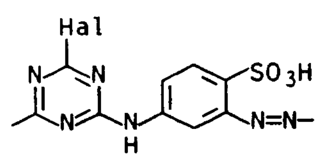

vorhanden ist und Y für Fluor oder Chlor und T für Hydroxysulfonyl stehen, die Summe der Hydroxysulfonylreste mindestens 10 beträgt,

sowie die Verwendung der neuen Farbstoffe zum Färben oder Bedrucken von Hydroxygruppen oder Stickstoff enthaltenden Substraten.

Die neuen Azoreaktivfarbstoffe der Formel I sind in Form der freien Säuren angegeben. Selbstverständlich sind jedoch auch ihre Salze, insbesondere ihre Alkalisalze, mitumfaßt.

In der JP-A-69 163/1985 sind Reaktivfarbstoffe beschrieben, die sich von denen der Formel I darin unterscheiden, daß dort der Ring A weder eine Hydroxysulfonyl- noch eine Carboxylgruppe, sondern einen zusätzlichen Anker auf Basis des Vinylsulfonylrests aufweist.

Es hat sich gezeigt, daß diese Farbstoffe noch anwendungstechnische Mängel aufweisen. Sie zeigen beispielsweise entweder mangelhafte Beständigkeit gegen alkalische und/oder peroxidhaltige Waschmittel oder sie fixieren bei der üblichen Färbetemperatur mit zu geringer Farbausbeute (siehe J.Soc. Dyers Col. Vol. 104, S. 425-431, 1988).

Die ältere EP-A-387 589 hat ähnliche Azoreaktivfarbstoffe zum Gegenstand. Sie unterscheiden sich jedoch in der Anzahl der Hydroxysulfonylgruppen.

Aufgabe der vorliegenden Erfindung war es nun, neue Azoreaktivfarbstoffe bereitzustellen, die vorteilhafte Eigenschaften, insbesondere eine hohe Fixierausbeute sowie hohe Naßechtheiten, aufweisen. Die neuen Farbstoffe sollten außerdem sowohl kalt wie auch heiß appliziert werden können.

Demgemäß wurden die eingangs näher bezeichneten Azoreaktivfarbstoffe der Formel I gefunden.

Alle in der obengenannten Formel I auftretenden Alkylgruppen können sowohl geradkettig als auch verzweigt sein.

Reste $R^1$ und $R^2$ sind z.B. Methyl, Ethyl, Propyl, Isopropyl, Butyl, Isobutyl, sec-Butyl, 2-Hydroxyethyl, 2- oder 3-Hydroxypropyl, 2- oder 4-Hydroxybutyl, 2-Methoxyethyl, 2- oder 3-Methoxypropyl, 2- oder 4-Methoxybutyl, 2-Ethoxyethyl, 2- oder 3-Ethoxypropyl, 2- oder 4-Ethoxybutyl, 2-Chlorethyl, 2- oder 3-Chlorpropyl, 2- oder 4-Chlorbutyl, 2-Cyanoethyl, 3-Cyanopropyl, 4-Cyanobutyl, 2-Hydroxysulfonylethyl, 3-Hydroxysulfonylpropyl, 4-Hydroxysulfonylbutyl, 2-Carboxyethyl, 3-Carboxypropyl oder 4-Carboxybutyl.

Geeignete Diazokomponenten, von denen sich der Rest

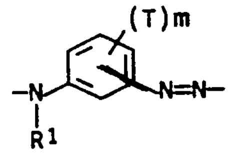

ableitet, sind z.B. 1,3-Diaminobenzol, 2,4-Diaminobenzolsulfonsäure, 2,5-Diaminobenzolsulfonsäure, 2,4-Diaminobenzoesäure, 2,4-Diaminobenzol-1,5-disulfonsäure oder 2,5-Diaminobenzol-1,4-disulfonsäure.

Reste der Kupplungskomponente der Formel

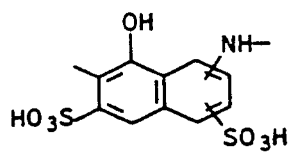

sind beispielsweise

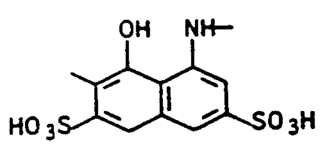

oder

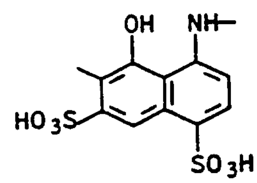

.

Die Reste

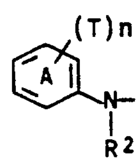

leiten sich beispielsweise von Anilin-2,4-disulfonsäure, N-Methyl- oder N-Ethylanilin-2,4-disulfonsäure, Anilin-2,5-disulfonsäure, N-Methyl- oder N-Ethylanilin-2,5-disulfonsäure, 2-Amino-4-hydroxysulfonylbenzoesäure, 2-Amino-5-hydroxysulfonylbenzoesäure, 2-Methylamino- oder 2-Ethylamino-5-hydroxysulfonylbenzoesäure, 4-Chloranilin-2,5-disulfonsäure, 3-Chloranilin-4,6-disulfonsäure, 2-Chloranilin-4,5-disulfonsäure, 4-Aminotoluol-2,5-disulfonsäure, 3-Aminophthalsäure, 4-Aminophthalsäure, Aminoterephthalsäure, 1-Aminonaphthalin-3,6- oder -3,8-disulfonsäure, 1-Aminonaphthalin-4,7-disulfonsäure oder 2-Aminonaphthalin-1,5-, -3,6- oder -6,8-disulfonsäure ab.

Hervorzuheben sind Azoreaktivfarbstoffe der Formel I, in der sich der Rest

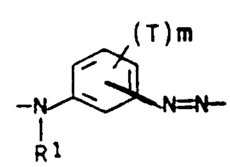

von folgenden Diazokomponenten ableitet:
2,4-Diaminobenzolsulfonsäure, 2,5-Diaminobenzolsulfonsäure oder 2,4-Diaminobenzol-1,5-disulfonsäure.

Hervorzuheben sind weiterhin Azoreaktivfarbstoffe der Formel I, in der der Ring A nicht benzoanelliert ist und n 2 bedeutet.

Hervorzuheben sind weiterhin Azoreaktivfarbstoffe der Formel I, in der der Rest der Kupplungskomponenten unabhängig voneinander die Formel

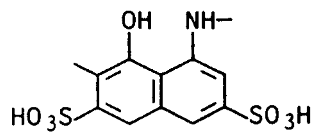

oder insbesondere

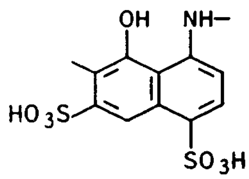

aufweist.

Hervorzuheben sind weiterhin Azoreaktivfarbstoffe der Formel I, in der die Summe der Hydroxysulfonylreste oder der Hydroxysulfonyl- und Carboxylreste zusammen 10 beträgt.

Die erfindungsgemäßen Azoreaktivfarbstoffe der Formel I können auch als Mischungen auftreten, wobei insbesondere Mischungen von solchen Farbstoffen zu nennen sind, die als Kupplungskomponente 1-Amino-8-hydroxynaphthalin-3,6- und -4,6-disulfonsäure aufweisen. Die Mischungen können dabei durch mechanisches Mischen oder durch Mischkupplung hergestellt werden. Das Mischungsverhältnis ist jeweils beliebig wählbar.

Von besonderem Interesse sind Azoreaktivfarbstoffe, die der Formel Ia

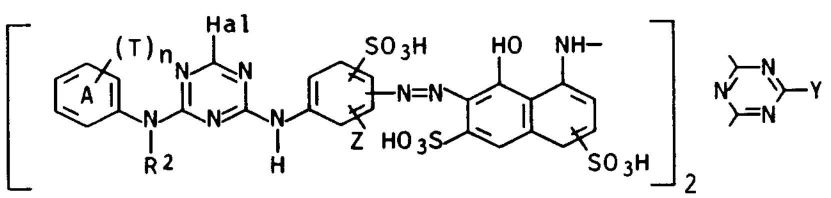 (Ia)

entsprechen, in der
$R^2$ Wasserstoff oder Methyl und
Z Wasserstoff oder Hydroxysulfonyl bedeuten und
n, T, Hal, Y und der Ring A jeweils die obengenannte Bedeutung besitzen.

Insbesondere zu nennen sind Azoreaktivfarbstoffe, die der Formel Ib

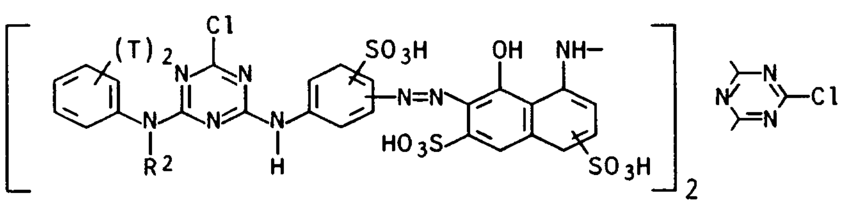 (Ib)

entsprechen, in der
$R^2$ Wasserstoff oder Methyl bedeuten und

T die obengenannte Bedeutung besitzt.

Die Herstellung der neuen Azoreaktivfarbstoffe der Formel I erfolgt nach an sich bekannten Methoden. Beispielsweise kann man

a) ein Amin der Formel II

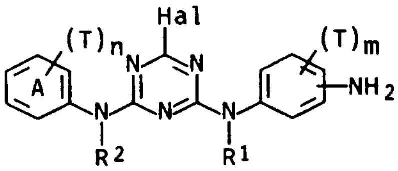

(II),

in der m, n, Hal, T, $R^1$, $R^2$ und der Ring A jeweils die obengenannte Bedeutung besitzen, diazotieren und mit einer Kupplungskomponente der Formel III

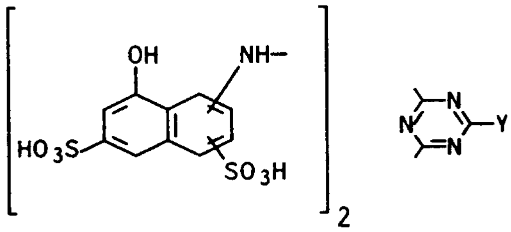

(III),

in der Y die obengenannte Bedeutung besitzt, kuppeln.

Eine weitere Methode besteht beispielsweise darin, daß man

b) ein Amin der Formel IV

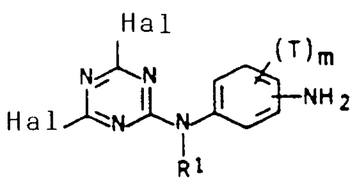

(IV),

in der m, $R^1$, Hal und T jeweils die obengenannte Bedeutung besitzen, diazotiert, mit einer Kupplungskomponente III kuppelt und anschließend noch mit einem Anilinderivat der Formel V

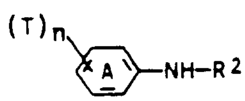

(V),

in der n, $R^2$, T und der Ring A jeweils die obengenannte Bedeutung besitzen, umsetzt.

Eine weitere Methode besteht beispielsweise darin, daß man

c) den Farbstoff der Formel VI

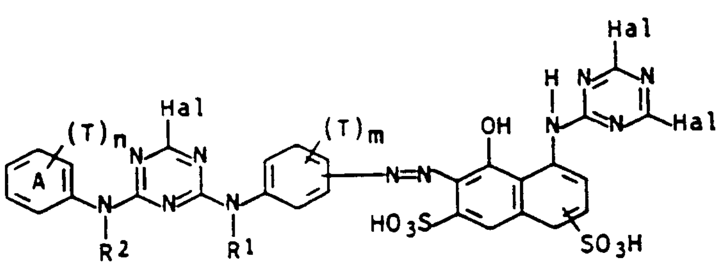

(VI),

in der m, n, Hal, $R^1$, $R^2$, T und der Ring A jeweils die obengenannte Bedeutung besitzen, mit einem weiteren Farbstoff der Formel VII

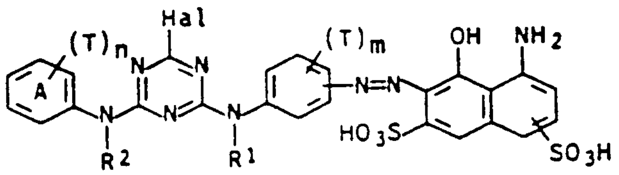

(VII),

in der m, n, Hal, $R^1$, $R^2$, T und der Ring A jeweils die obengenannte Bedeutung besitzen, umsetzt.

Wenn man unsymmetrische Azoreaktivfarbstoffe der Formel I herstellen will, empfiehlt es sich, die Methode a) oder die Methode c) durchzuführen. So kann man z.B. bei a) eine Kupplungskomponente der Formel III verwenden, bei der zwei verschiedene Aminonaphtholsulfonsäuren an den Triazinring geknüpft sind. Bei c) ist es beispielsweise möglich, einen Farbstoff VII mit einer solchen Aminonaphtholsulfonsäure zu verwenden, die von der im Farbstoff der Formel VI enthaltenen verschieden ist.

Eine weitere Methode unsymmetrischer Farbstoffe zu erhalten besteht darin, daß man einen Farbstoff der Formel VI mit einer entsprechenden Kupplungskomponente (z.B. 1-Amino-8-hydroxynaphthalin-3,6- oder -4,6-disulfonsäure) umsetzt und mit dem Diazoniumsalz, das sich von einem Amin der Formel II ableitet, kuppelt, wobei das Amin der Formel II entweder mit dem dem Farbstoff VI zugrundeliegenden Amin identisch oder aber davon verschieden ist. Auf diese Weise kann man zu unsymmetrischen Farbstoffen gelangen, die sich sowohl im Aminteil als auch im Kupplungskomponententeil unterscheiden.

Bevorzugt werden die erfindungsgemäßen Farbstoffe nach der Methode a) hergestellt.

Die neuen Reaktivfarbstoffe der Formel I eignen sich in vorteilhafter Weise zum Färben oder Bedrucken von Hydroxygruppen oder Stickstoff enthaltenden organischen Substraten. Solche Substrate sind beispielsweise Leder oder Fasermaterial, das überwiegend natürliche oder synthetische Polyamide oder natürliche oder regenerierte Cellulose enthält. Vorzugsweise eignen sich die neuen Farbstoffe zum Färben und Bedrucken von Textilmaterial auf der Basis von Baumwolle.

Dabei zeichnen sie sich durch eine niedrige Fixiertemperatur im sogenannten Ausziehverfahren und durch eine kurze Fixierzeit bei Raumtemperatur im sogenannten Kaltverweilverfahren aus. Außerdem werden die nachteiligen erniedrigten Waschechtheiten der sonst für solche Fixierbedingungen notwendigen Additionsanker-Farbstoffe vermieden. Die Farbstärke, Fixierrate und Lichtechtheit der neuen Farbstoffe sind sehr hoch.

Die folgenden Beispiele sollen die Erfindung näher erläutern.

Beispiel 1

a) Die Lösung von 0,5 Mol 1-Aminonaphth-8-ol-4,6-disulfonsäure in 400 ml Wasser und 30 ml 50 gew.%iger Natronlauge ließ man in eine intensiv gerührte Mischung aus 96,0 g Cyanurchlorid, 500 ml Eiswasser und 2 ml 30 gew.%iger Salzsäure einfliepen und rührte drei Stunden bei 5 bis 8 °C, bis das Aminonaphthalin vollständig in Lösung und acyliert war. Dieser Lösung wurde nun erneut eine Lösung des Natriumsalzes der 1-Aminonaphth-8-ol-4,6-disulfonsäure in obiger Menge und Konzentration zugegossen und unter Erwärmung auf 20 bis 25 °C der pH-Wert durch Einstreinen von 105 g Natriumhydrogencarbonat auf 5 erhöht. Nach dreistündigem Rühren unter diesen Bedingungen und nach Verdünnung mit 1 000 ml Wasser war die Kondensation beendet. Die Fällung des gebildeten 2,6-[Bis(8-hydroxy-4,6-dihydroxysulfonylnapth-1-yl-amino]-4-chlor-s-triazin wurde mit 700 g Kochsalz vervollständigt. Dann wurde abgesaugt und mit einer 20 gew.%igen Kochsalzlösung gewaschen. Die Ausbeute an Rohprodukt betrug 95 %.

b) 0,05 Mol 2-(2,4-Dihydroxysulfonylphenylamino)-4-chlor-6-(3-amino-4-hydroxysulfonylphenylamino)-s-triazin wurden in 300 ml Eiswasser gelöst und durch Zugabe von 15 ml 3,33 n Natriumnitritlösung und 17 ml 30 gew.-%iger Salzsäure diazotiert. Nach einstündigem Rühren in der Eiskälte wurde der Salpetrigsäureüberschuß mit Amidosulfonsäure zerstört und die Dispersion des Diazoniumsalzes mit der Aufschlämmung von 0,024 Mol der binären Kupplungskomponente aus a) in 150 ml Wasser vermischt. Die Kupplung erfolgte durch Zusatz von 100 ml gesättigter Natriumacetatlösung und Natriumhydrogencarbonat bis zu einem pH-Wert von 6 und Rühren über Nacht bei Raumtemperatur. Der vollständig in Lösung befindliche Farbstoff der Formel

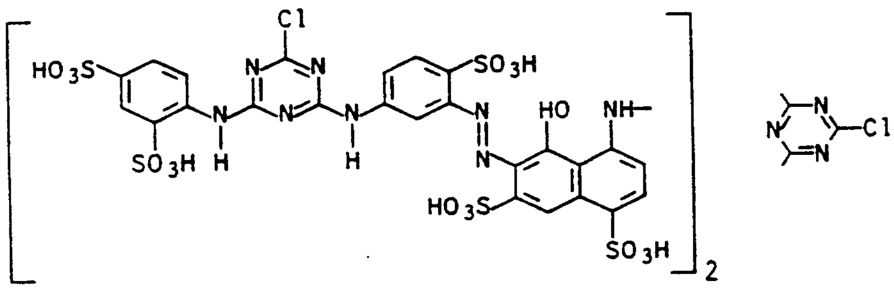

($\lambda_{max}$ (Wasser): 535 nm)
wurde mit 100 g Kaliumchlorid als Dekakaliumsalz gefällt und abfiltriert. Gewaschen wurde mit 5 gew.-%iger Kaliumchloridlösung und anschließend mit 70 vol.-%igem wäßrigem Aceton. Die Trocknung erfolgte bei Raumtemperatur unter vermindertem Druck.

Der so gewonnene Farbstoff färbt Cellulosematerialien aus alkalischem Bad sowohl im Kaltverweilverfahren bei Raumtemperatur mit 8-stündiger Fixierzeit als auch im Ausziehverfahren bei 60 °C mit hoher Fixierausbeute und Farbstärke in mittlerem Rotton mit sehr guter Lichtechtheit und sehr guten Naßechtheiten.

Beispiel 2

Analog Beispiel 1 wurde aus 2-(2,5-Dihydroxysulfonylphenylamino)-4-chlor-6-(4-amino-3-hydroxysulfonylphenylamino)-s-triazin und der Kupplungskomponente aus Beispiel 1a) der violette Farbstoff der Formel

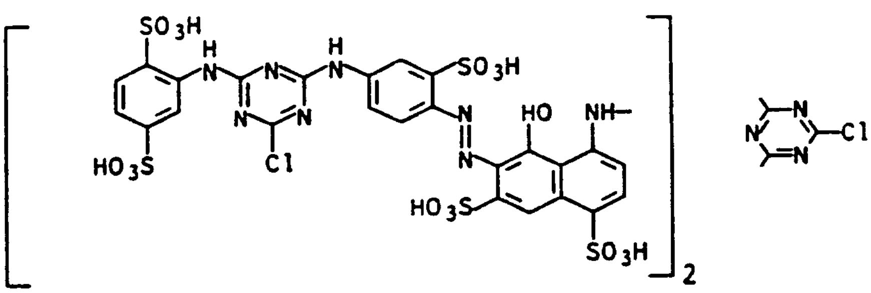

($\lambda_{max}$ (Wasser): 542,1 nm)
als Dekakaliumsalz erhalten, der bezüglich Färbebedingungen, Farbstärke und Echtheiten dem Farbstoff des Beispiels 1 vergleichbar ist.

Die in der folgenden Tabelle 1 aufgeführten Farbstoffe der Formel

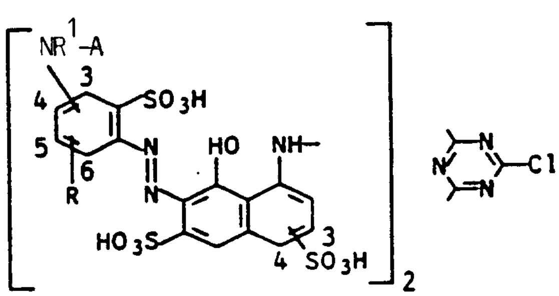

werden in analoger Weise erhalten und weisen ähnlich günstige Eigenschaften auf.

Tabelle 1

| Beispiel Nr. | A | R | 3-/4-$SO_3H$ | Farbton $\lambda_{max}$ [nm] in Wasser |
|---|---|---|---|---|
| 3 | 5- 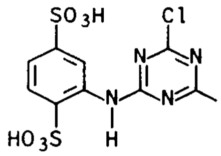 | H | 4 | neutralrot 535,1 |
| 4 | 5- 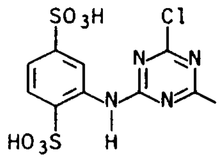 | H | 3 | blaustichig rot 536,1 |
| 5 | 4- 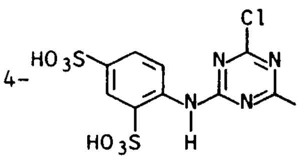 | H | 4 | violett 538 |
| 6 | 5- 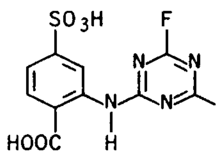 | H | 4 | neutralrot 535 |
| 7 | 5- 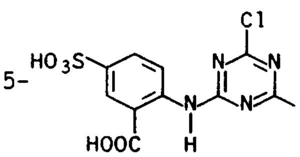 | H | 4 | neutralrot 533,1 |
| 8 | 4- 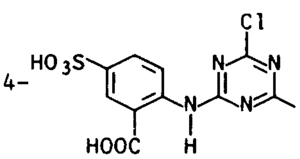 | H | 4 | violett 540,1 |
| 9 | 5- 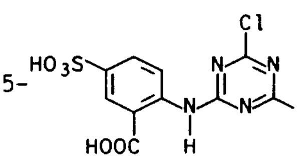 | H | 3 | blaustichig rot 535 |
| 10 | 5- 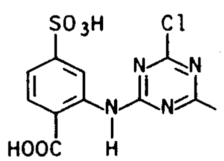 | H | 4 | neutralrot 535,1 |

Tabelle 1 - Forts.

| Beispiel Nr. | A | R | 3-/4-$SO_3H$ | Farbton $\lambda_{max}$ [nm] in Wasser |
|---|---|---|---|---|
| 11 | 5- 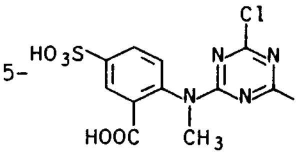 | H | 4 | neutralrot 510 |
| 12 | 4- 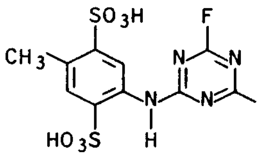 | H | 4 | neutralrot 536,1 |
| 13 | 4- 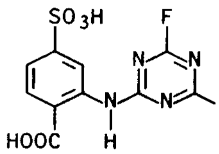 | H | 4 | violett 542 |
| 14 | 5- 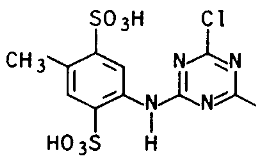 | H | 4 | neutralrot 536 |
| 15 | 5- 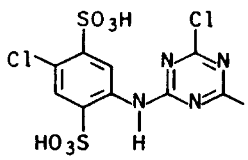 | H | 4 | neutralrot 535 |
| 16 | 4- 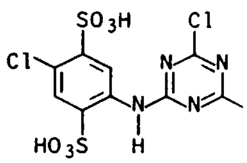 | H | 4 | violett 538 |
| 17 | 5- 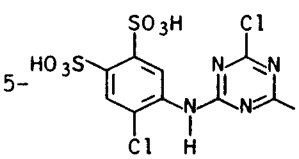 | H | 4 | neutralrot 535 |
| 18 | 4- 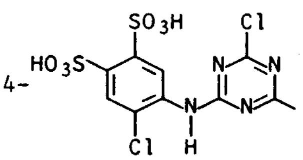 | H | 4 | violett 538 |

Tabelle 1 - Forts.

| Beispiel Nr. | A | R | 3-/4-$SO_3H$ | Farbton $\lambda_{max}$ [nm] in Wasser |
|---|---|---|---|---|
| 19 | 5- 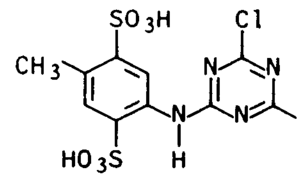 | 4-$SO_3H$ | 4 | neutralrot 534 |
| 20 | 5- 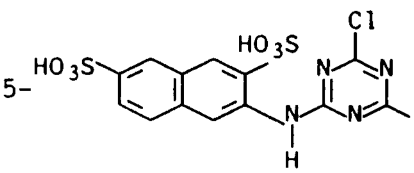 | H | 4 | neutralrot 533 |
| 21 | 5- 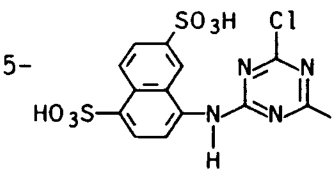 | H | 4 | neutralrot 536 |
| 22 | 5- 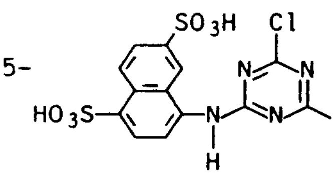 | 4-$SO_3H$ | 4 | neutralrot 534 |
| 23 | 4- 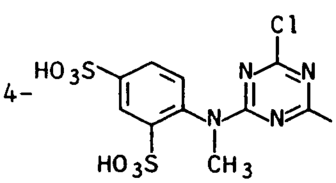 | H | 4 | violett 515 |
| 24 | 5- 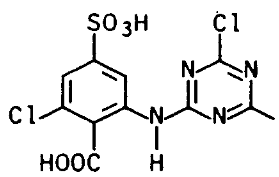 | H | 4 | neutralrot 535 |
| 25 | 4- 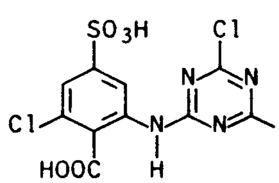 | H | 4 | violett 514 |

Aus je einem Äquivalent 1-Aminonapht-8-ol-3,6-disulfonsäure und Cyanurchlorid sowie aus einem weiteren Äquivalent 1-Aminonaphth-8-ol-4,6-disulfonsäure wurde nach den Angaben des Beispiels 1a ein gemischt substituiertes 2,6-Diamino-4-chlor-s-triazin erhalten. Die Farbtöne der mit den Diazokomponenten der bisherigen Beispiele und dieser Kupplungskomponente erhaltenen Farbstoffe liegen zwischen denen der bereits beschriebenen symmetrischen Farbstoffe. So liegt z.B. der Farbton des Farbstoffs aus Beispiel 24 zwischen denen aus Beispiel 1 und 3 und ist visuell kaum zu unterscheiden. Die Fixierbedingungen,

Fixierausbeuten und Naßechtheiten sind denen der bisherigen Beispiele vergleichbar.

Die in der folgenden Tabelle 2 aufgeführten Farbstoffe gehorchen der Formel

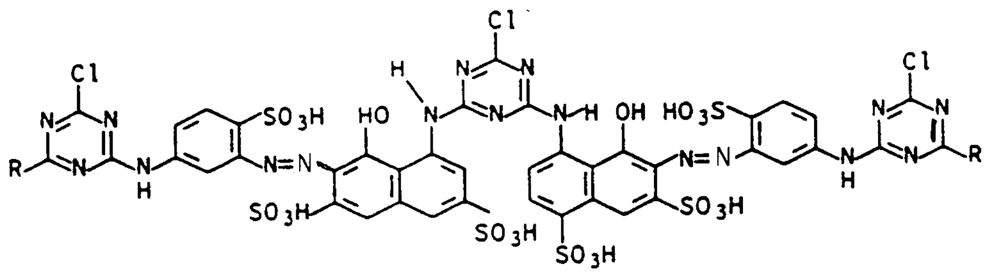

Tabelle 2

| Beispiel Nr. | R | $\lambda_{max}$ [nm] in Wasser |
|---|---|---|
| 26 | 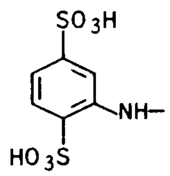 | 535 |
| 27 | 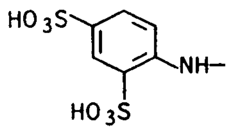 | 535 |
| 28 | 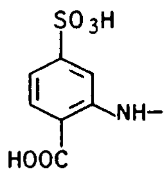 | 535 |
| 29 | 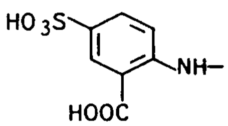 | 535 |
| 30 | 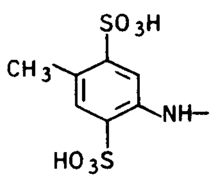 | 535 |
| 31 | 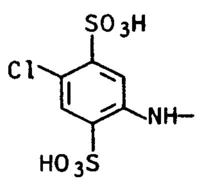 | 535 |
| 32 | 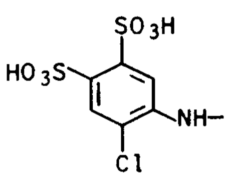 | 535 |
| 33 | 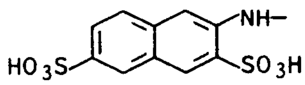 | 535 |

Beispiel 34

a) 0,25 Mol der binären Kupplungskomponente aus Beispiel 1a wurden in 1000 ml Wasser und 100 g (0,952 Mol) Diethanolamin 8 Stunden bei 70 ° C gerührt und filtriert. Das Filtrat wurde bei einem pH-Wert

von 3,5 mit Aceton gefällt und isoliert.

Das erhaltene, farblose Produkt enthielt nur noch ionogenes Chlor (Reinheit: 87 % - HPLC).

b) 0,024 Mol dieser Verbindung ergaben mit 0,05 Mol diazotiertem 2-(2,4-Dihydroxysulfonylphenylamino)-4-chlor-6-(3-amino-4-hydroxysulfonylphenylamino)-s-triazin, analog Beispiel 1b gekuppelt, den Farbstoff der Formel

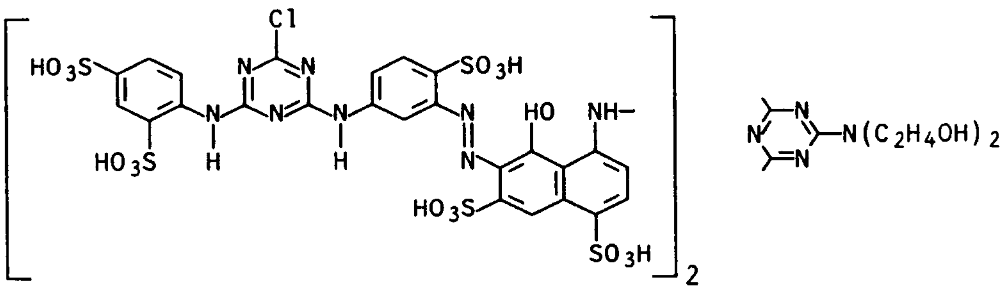

($\lambda_{max}$ (Wasser): 510 nm),
der Baumwollmaterialien sowohl bei Raumtemperatur nach dem Kaltverweilverfahren als auch bei 60 °C in rotem Ton färbt.

Beispiel 35

a) 0,1 Mol der Kupplungskomponente aus Beispiel 1a wurden durch 4-stündiges Rühren in 300 ml Wasser und 40 ml 30 gew.-%iger Salzsäure bei 40 bis 50 °C hydrolysiert. Man saugte eiskalt ab und wusch mit 90 vol.-%igem wäßrigem Aceton.

b) 0,024 Mol des so erhaltenen, feuchten Produkts wurden in 200 ml Wasser aufgeschlämmt und mit dem Diazoniumsalz aus Beispiel 1b zum roten Farbstoff der Formel

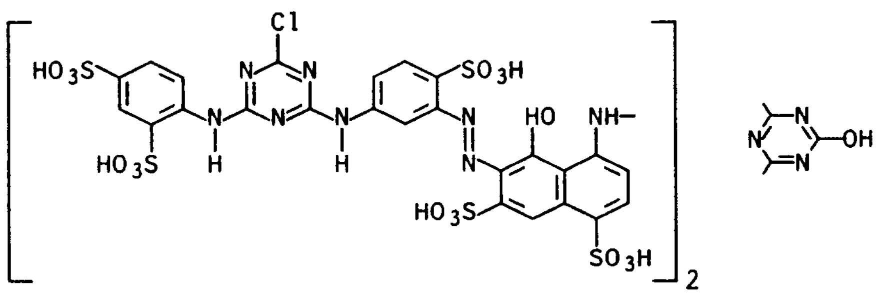

gekuppelt, der sich unter den in Beispiel 40 genannten Färbebedingungen ebenfalls applizieren läßt ($\lambda_{max}$: 533 nm).

Beispiel 36

a) 0,05 Mol der binären Kupplungskomponente aus Beispiel 1a wurden in 100 ml Methanol, 30 ml 30 gew.-%iger methanolischen Natriummethylatlösung und 50 ml Dimethylsulfoxid bei Raumtemperatur über Nacht gerührt. Durch Fällung mit 250 ml Aceton und Absaugen, wurde die Methoxytriazinylverbindung isoliert.

b) Mit dem Diazoniumsalz aus Beispiel 1b entstand unter analogen Bedingungen der Farbstoff der Formel

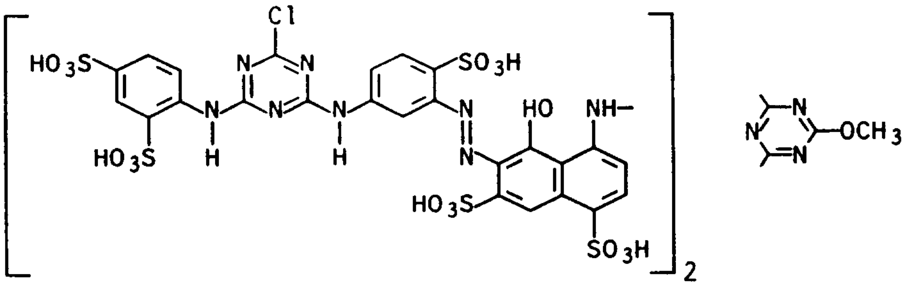

($\lambda_{max}$: 532 nm), der ebenso im Kaltverweilverfahren mit hoher Fixierausbeute appliziert werden kann.

Beispiele 37 und 38

Analog wurden die Farbstoffe der Formel

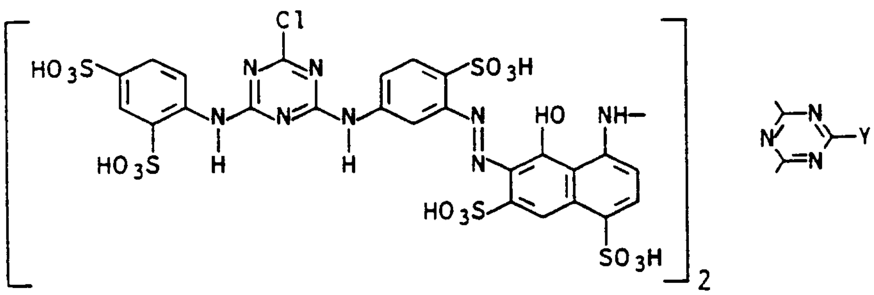

erhalten, die sich in Färbebedingungen und Echtheiten analog verhalten.
Beispiel 37 Y = NH-$C_2H_4$-OH $\lambda_{max}$: 512 nm
Beispiel 38 Y = NH-$C_2H_4$-$SO_3H$ $\lambda_{max}$: 512 nm

Beispiel 39

100 g eines Baumwollgarns wurden in einem Färbebad, das 1500 ml Wasser, 2,0 g des Farbstoffes aus Beispiel 2, 75 g Natriumsulfat und 30 g Soda enthielt, behandelt. Ab 30 °C wurde die Temperatur innerhalb von 30 Minuten auf 60 °C gesteigert und 60 Minuten bei diesem Wert gehalten.

Nach der üblichen Fertigstellung durch Spülen und kochendes Seifen erhielt man eine Färbung in einem klaren rotvioletten Ton mit ausgezeichneten Echtheitseigenschaften.

Beispiel 40

Ein Baumwollgewebe wurde auf einem Dreiwalzenfoulard bei Raumtemperatur mit einer Färbeflotte getränkt, die in 1000 g Flotte 16 g des Farbstoffes aus Beispiel 1, 100 g Natronwasserglas (38 ° Bé), 50 g Natronlauge (38 ° Bé) und 100 g Harnstoff enthielt.

Nach dem Imprägnieren unter 70 % Flottenaufnahme wurde das Gewebe aufgerollt und nach Umschließen mit einer Folie während 8 Stunden bei Raumtemperatur in feuchtem Zustand gelagert.

Nach der üblichen Fertigstellung durch Spülen und kochendes Seifen erhielt man eine farbstarke Färbung in einem brillanten Rotton mit sehr guten Echtheitseigenschaften.

## Patentansprüche

**1.** Azoreaktivfarbstoffe der Formel I

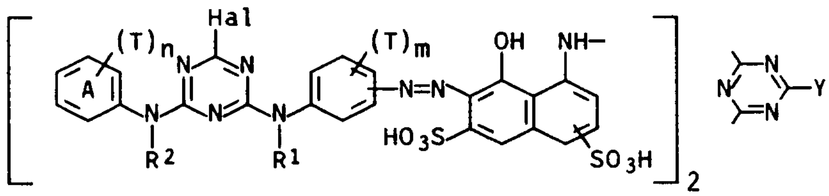 (I),

in der

| | |
|---|---|
| m | 0, 1 oder 2, |
| n | 1 oder 2, |
| $R^1$ und $R^2$ | gleich oder verschieden sind und unabhängig voneinander jeweils Wasserstoff, $C_1$-$C_4$-Alkyl, das gegebenenfalls durch Hydroxy, $C_1$-$C_4$-Alkoxy, Halogen, Cyano, Carboxyl oder Hydroxysulfonyl substituiert ist, |
| T | gleich oder verschieden ist und Carboxyl oder Hydroxysulfonyl, |
| Hal | Fluor oder Chlor und |
| Y | Fluor, Chlor oder den Rest $NR^1R^2$, $OR^1$ oder $SR^1$, wobei $R^1$ und $R^2$ jeweils die obengenannte Bedeutung besitzen, bedeuten und |

der Ring A benzoanelliert und/oder durch $C_1$-$C_4$-Alkyl, $C_1$-$C_4$-Alkoxy oder Halogen substituiert sein kann,

mit der Maßgabe, daß

a) die Summe der Hydroxysulfonylreste oder der Hydroxysulfonyl- und Carboxylreste zusammen mindestens 8 beträgt, und daß

b) wenn das Strukturelement der Formel

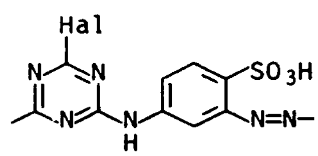

vorhanden ist und Y für Fluor oder Chlor und T für Hydroxysulfonyl stehen, die Summe der Hydroxysulfonylreste mindestens 10 beträgt.

**2.** Azoreaktivfarbstoffe nach Anspruch 1, die der Formel Ia

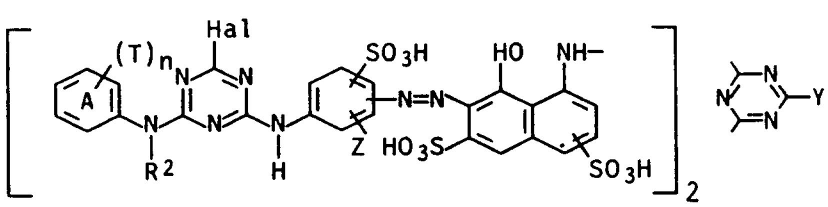 (Ia)

entsprechen, in der

$R^2$ Wasserstoff oder Methyl und

Z Wasserstoff oder Hydroxysulfonyl bedeuten und

n, T, Hal, Y und der Ring A jeweils die in Anspruch 1 genannte Bedeutung besitzen.

**3.** Azoreaktivfarbstoffe nach Anspruch 1, die der Formel Ib

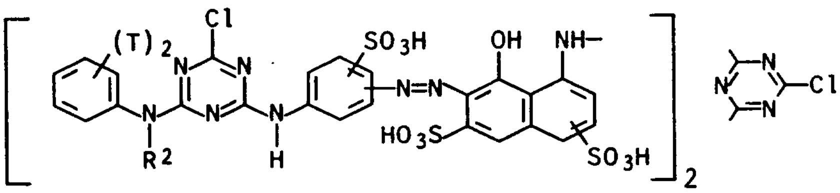 (Ib)

entsprechen, in der
$R^2$ Wasserstoff oder Methyl bedeuten und
T die in Anspruch 1 genannte Bedeutung besitzt.

**4.** Verwendung der Azoreaktivfarbstoffe gemäß Anspruch 1 zum Färben oder Bedrucken von Hydroxygruppen oder Stickstoff enthaltenden Substraten.

## Claims

**1.** Reactive azo dyes of the formula I

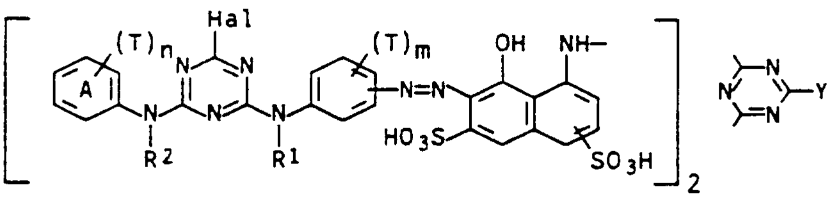 (I),

where

| | |
|---|---|
| m | is 0, 1 or 2, |
| n | is 1 or 2, |
| $R^1$ and $R^2$ | are identical or different and each is independently of the other hydrogen or $C_1$-$C_4$-alkyl which may be hydroxyl-, $C_1$-$C_4$-alkoxy-, halogen-, cyano-, carboxyl- or hydroxysulfonyl-substituted, |
| T | is identical or different and denotes carboxyl or hydroxysulfonyl, |
| Hal | is fluorine or chlorine, |
| Y | is fluorine, chlorine or the radical $NR^1R^2$, $OR^1$ or $SR^1$, wherein $R^1$ and $R^2$ are each as defined above, and |

the ring A may be benzofused and/or $C_1$-$C_4$-alkyl-, $C_1$-$C_4$-alkoxy- or halogen-substituted,
with the proviso that

a) the sum of the hydroxysulfonyl radicals or of the hydroxysulfonyl and carboxyl radicals together is at least 8, and that

b) when the structural element of the formula

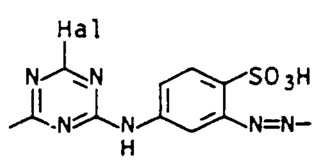

is present and Y stands for fluorine or chlorine and T for hydroxysulfonyl, the sum of the hydroxysulfonyl radicals is at least 10.

**2.** Reactive azo dyes as claimed in claim 1 conforming to the formula Ia

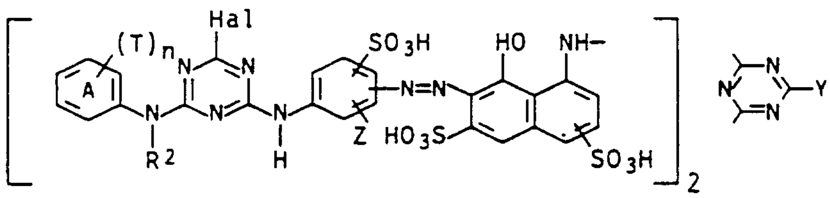 (Ia)

where

| | |
|---|---|
| $R^2$ | is hydrogen or methyl, |
| Z | is hydrogen or hydroxysulfonyl, and |
| n, T, Hal, Y | and the ring A are each as defined in claim 1. |

**3.** Reactive azo dyes as claimed in claim 1 conforming to the formula Ib

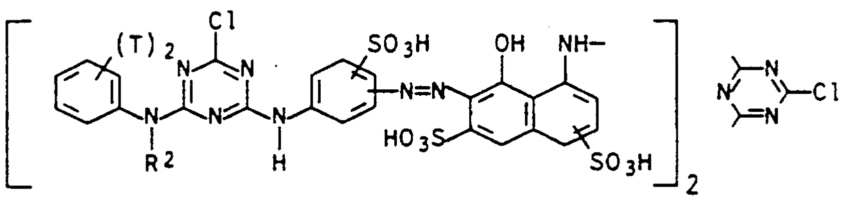 (Ib)

where

| | |
|---|---|
| $R^2$ | is hydrogen or methyl, and |
| T | is as defined in claim 1. |

**4.** The use of the reactive azo dyes of claim 1 for dyeing or printing hydroxyl- or nitrogen-containing substrates.

**Revendications**

**1.** Colorants azoïques réactifs de formule I

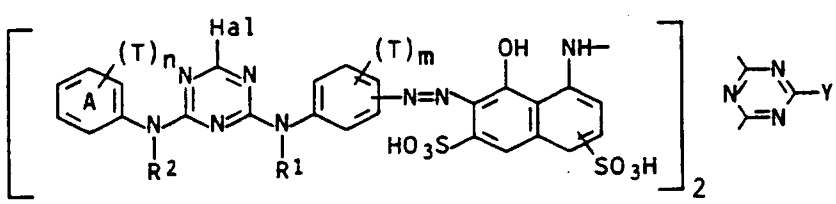 (I),

dans laquelle

| | |
|---|---|
| m | est mis pour 0, 1 ou 2, |
| n | est mis pour 1 ou 2, |
| $R^1$ et $R^2$ | sont identiques ou différents et représentent chacun, indépendamment l'un de l'autre, un atome d'hydrogène ou un reste alkyle en $C_1$-$C_4$ qui est éventuellement substitué par un radical hydroxy, alcoxy en $C_1$-$C_4$, halogéno, cyano, carboxyle ou hydroxysulfonyle, |
| | les restes T sont identiques ou différents et représentent des groupements carboxyle ou hydroxysulfonyle, |
| Hal | représente un atome de fluor ou de chlore, |
| Y | représente un atome de fluor, de chlore ou le reste $NR^1R^2$, $OR^1$ ou $SR^1$, $R^1$ et $R^2$ ayant chacun la signification donnée ci-dessus, et |

le noyau A peut être benzocondensé et/ou substitué par un reste alkyle en $C_1$-$C_4$, alcoxy en $C_1$-$C_4$ ou par un atome d'halogène,

étant spécifié que

a) la somme des restes hydroxysulfonyle ou des restes hydroxysulfonyle et carboxyle pris ensemble s'éléve au moins à 8 et

b) lorsque l'élément structurel de formule

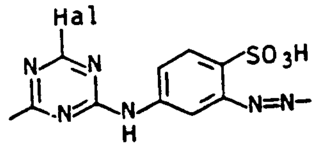

est présent, que Y est mis pour un atome de fluor ou de chlore et que T est mis pour un groupement hydroxysulfonyle, la somme des restes hydroxysulfonyle s'élève au moins à 10.

**2.** Colorants azoïques réactifs selon la revendication 1, qui répondent à la formule Ia

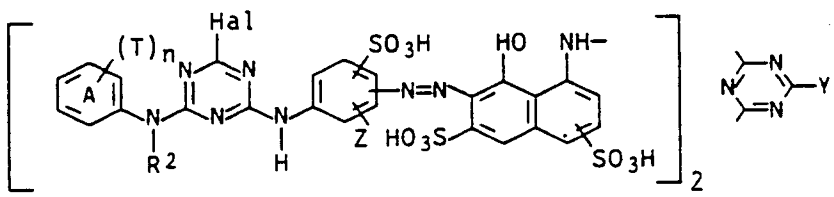

(Ia)

dans laquelle

| | |
|---|---|
| $R^2$ | représente un atome d'hydrogène ou un reste méthyle, |
| Z | représente un atome d'hydrogène ou un reste hydroxysulfonyle et |
| n, T, Hal, Y | et le noyau A ont chacun la signification donnée dans la revendication 1. |

**3.** Colorants azoïques réactifs selon la revendication 1, qui répondent à la formule Ib

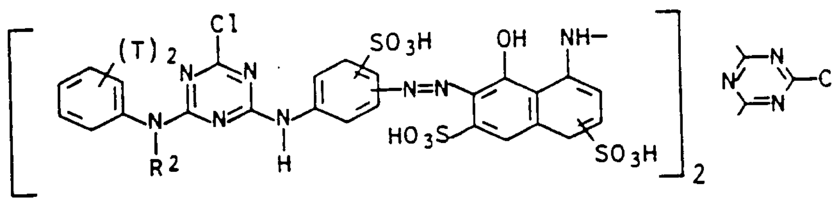

(Ib)

dans laquelle

| | |
|---|---|
| $R^2$ | représente un atome d'hydrogène ou un reste méthyle et |
| T | a la la signification donnée dans la revendication 1. |

**4.** Utilisation des colorants azoïques réactifs selon la revendication 1 pour la teinture ou l'impression de substrats contenant des groupements hydroxy ou des atomes d'azote.